(19) Europäisches Patentamt
European Patent Office
Office européen des brevets

(11) **EP 2 594 169 B1**

(12) **FASCICULE DE BREVET EUROPEEN**

(45) Date de publication et mention de la délivrance du brevet:
**15.04.2015 Bulletin 2015/16**

(51) Int Cl.:
***A47J 27/62*** *(2006.01)*

(21) Numéro de dépôt: **12192999.6**

(22) Date de dépôt: **16.11.2012**

(54) **Dispositif de cuisson**

Kochvorrichtung

Cooking device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2011 FR 1160507**

(43) Date de publication de la demande:
**22.05.2013 Bulletin 2013/21**

(73) Titulaire: **SEB SA**
**69130 Ecully (FR)**

(72) Inventeur: **Valance, Nicolas**
**21000 Dijon (FR)**

(74) Mandataire: **Verriest, Philippe et al**
**Cabinet Germain & Maureau**
**12, rue Boileau**
**BP 6153**
**69466 Lyon Cedex 06 (FR)**

(56) Documents cités:
**WO-A2-01/70087    US-A- 5 893 051**

**Description**

La présente invention concerne le domaine des préparations culinaires.

Plus précisément, la présente invention a pour objet un dispositif de commande d'un appareil de cuisson ainsi qu'un appareil de cuisson et un ensemble comprenant l'appareil de cuisson et le dispositif de commande.

Un appareil connu est décrit dans US5893051A.

Il est connu d'utiliser un dispositif de commande d'un appareil de cuisson, ledit appareil de cuisson comprenant :

- une enceinte de cuisson destinée à accueillir au moins un aliment déterminé ou une pluralité d'ingrédients d'une recette de cuisine déterminée,
- un composant de chauffage de l'enceinte de cuisson,

le dispositif de commande comprenant :

- une unité de commande du composant de chauffage agencée pour définir un cycle de cuisson comprenant au moins une combinaison de paramètres de cuisson déterminés, tels que le temps de cuisson et/ou la température de cuisson,
- une base de données comprenant :

    - un premier groupe d'aliments déterminés et/ou de recettes déterminées comprenant une pluralité d'ingrédients déterminés destinés à être introduits dans l'enceinte de cuisson de l'appareil de cuisson, et
    - un deuxième groupe de paramètres descriptifs pour au moins un aliment déterminé et/ou la pluralité d'ingrédients déterminés des recettes du premier groupe.

Le premier groupe et le deuxième groupe définissent d'une façon connue en soi des cycles de cuisson préenregistrés dans la mémoire ou la base de données de l'appareil.

Cependant, ces cycles de cuisson préenregistrés ne permettent pas d'optimiser la cuisson des aliments ou de la pluralité d'ingrédients insérés dans l'enceinte de cuisson en fonction des caractéristiques intrinsèques de ces aliments, ce qui induit une cuisson approximative des aliments.

La présente invention a pour but de résoudre tout ou partie des inconvénients mentionnés ci-dessus.

A cet effet, la présente invention a pour objet un appareil de cuisson comme défini dans la revendication 1.

La détermination de la surface spécifique d'au moins un élément unitaire d'au moins un aliment déterminé introduit dans l'enceinte de cuisson de l'appareil de cuisson permet de caractériser d'une façon précise cet aliment et donc d'optimiser sa cuisson.

Selon un aspect de l'invention, l'unité de commande du composant de chauffage est agencée pour opérer la détermination d'au moins une combinaison de paramètres de cuisson en fonction de la recette déterminée.

Selon un aspect de l'invention, l'unité de commande est agencée pour définir un cycle de cuisson comprenant une suite séquentielle de combinaisons de paramètres de cuisson déterminés.

Cette disposition permet d'optimiser la cuisson de plusieurs aliments ayant des paramètres de cuisson différents.

Selon un aspect de l'invention, l'unité de commande est agencée pour déterminer l'au moins une combinaison de paramètres de cuisson en prenant en compte le type d'aliment déterminé ou le type de l'au moins un ingrédient parmi la pluralité d'ingrédients de la recette déterminée.

Par type d'aliment, on entend en particulier type de viande, comme par exemple boeuf, volaille, type de légume ou type de féculent/céréale.

Selon un aspect de l'invention, le dispositif de commande comprend :

- une base de données comprenant :

    - un premier groupe comprenant des aliments déterminés et/ou des recettes déterminées comprenant une pluralité d'ingrédients déterminés destinés à être introduits dans l'enceinte de cuisson de l'appareil de cuisson, et
    - un deuxième groupe comprenant des paramètres descriptifs d'au moins un élément unitaire des aliments déterminés et/ou d'au moins un ingrédient parmi la pluralité d'ingrédients des recettes déterminées du premier groupe,

- une interface utilisateur comprenant :

    - des premiers moyens de sélection d'un aliment déterminé ou d'une recette déterminée dans le premier groupe de la base de données, et

- des deuxièmes moyens de sélection de paramètres descriptifs dans le deuxième groupe de la base de données de l'au moins un ingrédient parmi la pluralité d'ingrédients de la recette déterminée sélectionnée dans le premier groupe.

Cette disposition permet de guider l'utilisateur dans ses choix d'aliments ou de recettes à cuisiner.

Selon un aspect de l'invention, l'interface utilisateur comprend des moyens d'affichage du type graphique avec écran matriciel.

Cette disposition permet de définir une interface ergonomique intuitive.

Selon un aspect de l'invention, les premiers et/ou deuxièmes moyens de sélection comprennent une molette de sélection rotative.

Cette disposition permet de réduire le nombre de moyens différents pour effectuer une sélection et pour la valider ainsi que de réduire le temps consacré à la sélection.

Selon un aspect de l'invention, les paramètres descriptifs de l'au moins un élément unitaire de l'aliment déterminé ou de l'au moins un ingrédient parmi la pluralité d'ingrédients de la recette déterminée comprennent la forme de l'élément unitaire et/ou sa taille.

Cette disposition permet d'affiner le calcul de la surface spécifique d'au moins un élément unitaire.

Selon un aspect de l'invention, les paramètres descriptifs de l'au moins un ingrédient parmi la pluralité d'ingrédients de la recette déterminée comprennent la quantité d'éléments unitaires, notamment leur poids total.

Cette disposition permet d'affiner le calcul de la surface spécifique d'au moins un élément unitaire.

Selon un aspect de l'invention, les paramètres descriptifs de l'au moins un ingrédient parmi la pluralité d'ingrédients de la recette déterminée comprennent l'état de l'au moins un élément unitaire, notamment surgelé ou frais.

Cette disposition permet d'affiner la détermination des paramètres de cuisson.

Selon un aspect de l'invention, l'interface utilisateur comprend des troisièmes moyens de sélection de préférences de l'utilisateur dans un troisième groupe de la base de données, notamment le mode de cuisson, par exemple vapeur, par immersion, dorage, et le niveau de cuisson, par exemple saignant, à point, croquant, moelleux, l'unité de commande étant agencée pour opérer la détermination d'une combinaison de paramètres de cuisson déterminés en fonction également des préférences sélectionnées par l'utilisateur.

Cette disposition permet d'affiner la détermination des paramètres de cuisson en fonction de préférences culinaires de l'utilisateur.

Selon un aspect de l'invention, la base de données comprend un quatrième groupe de cycles de cuisson comprenant une suite séquentielle de combinaisons déterminées de paramètres de cuisson déterminés, chaque combinaison déterminée de la suite de paramètres de cuisson étant associé à des combinaisons possibles entre :

- les aliments déterminés ou les recettes déterminées du premier groupe, avec
- les paramètres descriptifs d'au moins un ingrédient parmi la pluralité d'ingrédients des recettes déterminées du deuxième groupe, et avec
- le cas échéant les préférences du troisième groupe,

la détermination du cycle de cuisson par l'unité de commande consistant à sélectionner un cycle de cuisson du quatrième groupe en fonction de la sélection par l'utilisateur :

- d'un aliment déterminé ou d'une recette déterminée dans le premier groupe,
- de paramètres descriptifs dans le deuxième groupe de la base de données de l'au moins un ingrédient parmi la pluralité d'ingrédients de la recette déterminée sélectionnée dans le premier groupe, et le cas échéant
- des préférences sélectionnées dans le troisième groupe.

Cette disposition permet d'établir des cycles de cuisson optimisés pour la cuisson des aliments.

Selon un aspect de l'invention, le dispositif de commande comporte des moyens de connexion à une source de données comprenant une mise à jour du premier groupe et/ou du deuxième groupe et/ou du troisième groupe et des cycles de cuisson du quatrième groupe.

La présente invention a également pour objet un appareil de cuisson comprenant une enceinte de cuisson destinée à accueillir au moins un aliment déterminé ou une pluralité d'ingrédients d'une recette de cuisine déterminée, un composant de chauffage de l'enceinte de cuisson, et un dispositif de commande tel que décrit précédemment.

La présente invention a également pour objet un ensemble de cuisson comprenant d'une part un appareil de cuisson comportant une enceinte de cuisson destinée à accueillir au moins un aliment déterminé ou une pluralité d'ingrédients d'une recette de cuisine déterminée, un composant de chauffage de l'enceinte de cuisson et des premiers moyens de communication, et d'autre part un dispositif de commande tel que décrit précédemment, ledit dispositif comprenant en outre des deuxièmes moyens de communication agencés pour communiquer avec les premiers moyens de communications sans fil de l'appareil de cuisson.

Avantageusement, les premiers moyens de communication et les deuxièmes moyens de communication sont du type sans fil.

Selon un aspect de l'invention, le dispositif de commande est un ordiphone.

La présente invention a également pour objet, un procédé de cuisson d'un aliment déterminé ou d'au moins un ingrédient parmi une pluralité d'ingrédients d'une recette déterminée dans un appareil de cuisson tel que décrit précédemment, comprenant une étape consistant à déterminer au moins une combinaison de paramètres de cuisson déterminés en fonction de la surface spécifique d'au moins un élément unitaire de l'au moins un aliment déterminé ou de l'au moins un ingrédient parmi la pluralité d'ingrédients de la recette de cuisine déterminée introduits dans l'enceinte de cuisson de l'appareil de cuisson, ladite surface spécifique étant estimée à partir de paramètres descriptifs de l'au moins un élément unitaire de l'aliment déterminé ou de l'au moins un ingrédient parmi la pluralité d'ingrédients de la recette déterminée.

Ce procédé permet de déterminer une combinaison de paramètres de cuisson précis appliqués à l'aliment déterminé ou à la pluralité d'ingrédients de la recette déterminée.

Selon une mise en oeuvre du procédé, le procédé comprend des étapes consistant à :

(a) : sélectionner un aliment déterminé ou une recette déterminée (Ri) dans un premier groupe de la base de données à l'aide de premiers moyens de sélection,
(b) : sélectionner dans un deuxième groupe de la base de données des paramètres descriptifs de l'au moins un ingrédient parmi la pluralité d'ingrédients de la recette déterminée sélectionnée dans le premier groupe à l'aide de deuxièmes moyens de sélection,
(c) : réaliser l'étape du procédé décrit précédemment.

Ce procédé permet de guider l'utilisateur en lui proposant à l'avance une sélection d'aliments ou de recettes à cuisiner.

Selon une mise en ouvre du procédé de cuisson d'une pluralité d'ingrédients d'une recette déterminée, le procédé comprend en outre des étapes consistant à :

(d) : démarrer un cycle de cuisson déterminé comprenant une suite séquentielle de combinaisons de paramètres de cuisson déterminés,
(e) : indiquer un ou des premiers ingrédients de la recette sélectionnée à introduire dans l'enceinte de cuisson en fonction des paramètres descriptifs sélectionnés,
(f) : introduire un ou des premiers ingrédients de la recette sélectionnée dans l'enceinte de cuisson selon les paramètres descriptifs sélectionnés,
(g) : appliquer une première séquence de la suite séquentielle de combinaison déterminée des paramètres de cuisson comprise dans le cycle de cuisson déterminé afin de réaliser une précuisson de ce ou de ces premiers ingrédients.

Selon une mise en oeuvre du procédé, le procédé comprend en outre des étapes consistant à :

(h) : indiquer séquentiellement un ou d'autres ingrédients de la recette sélectionnée à introduire dans l'enceinte de cuisson en fonction des paramètres descriptifs sélectionnés, et
(i) : introduire le ou les autres ingrédients indiqués de la recette sélectionnée dans l'enceinte de cuisson en fonction des paramètres descriptifs sélectionnés,
(j) : appliquer une autre séquence de la suite séquentielle de combinaison déterminée des paramètres de cuisson comprise dans le cycle de cuisson afin de réaliser la cuisson du ou des ingrédients se trouvant déjà dans l'enceinte de cuisson et de ce ou de ces autres ingrédients,
(k) : le cas échéant, recommencer à l'étape (h) consistant à indiquer séquentiellement un ou d'autres ingrédients de la recette sélectionnée à introduire dans l'enceinte de cuisson en fonction des paramètres descriptifs sélectionnés jusqu'à avoir introduit la totalité des aliments de la recette de cuisine et avoir terminé la dernière séquence de la suite séquentielle de combinaison déterminée des paramètres de cuisson du cycle de cuisson déterminé.

Ce procédé permet d'assister un utilisateur dans la préparation d'une recette de cuisine comprenant plusieurs ingrédients de cuisson différente pour lui indiquer quels aliments introduire dans l'enceinte de cuisson et à quels moments.

De toute façon, l'invention sera bien comprise à l'aide de la description qui suit, en référence au dessin schématique annexé représentant, à titre d'exemple non limitatif, un appareil et/ou un dispositif de commande selon l'invention ainsi que le procédé de cuisson d'une recette de cuisine.

La figure 1 montre une vue globale d'un appareil de cuisson selon un premier mode de réalisation de l'invention.

La figure 2 montre une vue éclatée de l'appareil de cuisson de la figure 1.

La figure 3 est un schéma synoptique de l'appareil de cuisson des figures 1 et 2.

La figure 4 est un schéma synoptique d'un ensemble de cuisson selon l'invention.

La figure 5 illustre les étapes d'un procédé de cuisson d'un aliment selon l'invention.

Les figures 6 à 8 illustre les étapes d'un procédé de cuisson d'une pluralité d'ingrédients d'une recette selon une mise en oeuvre préférée de l'invention.

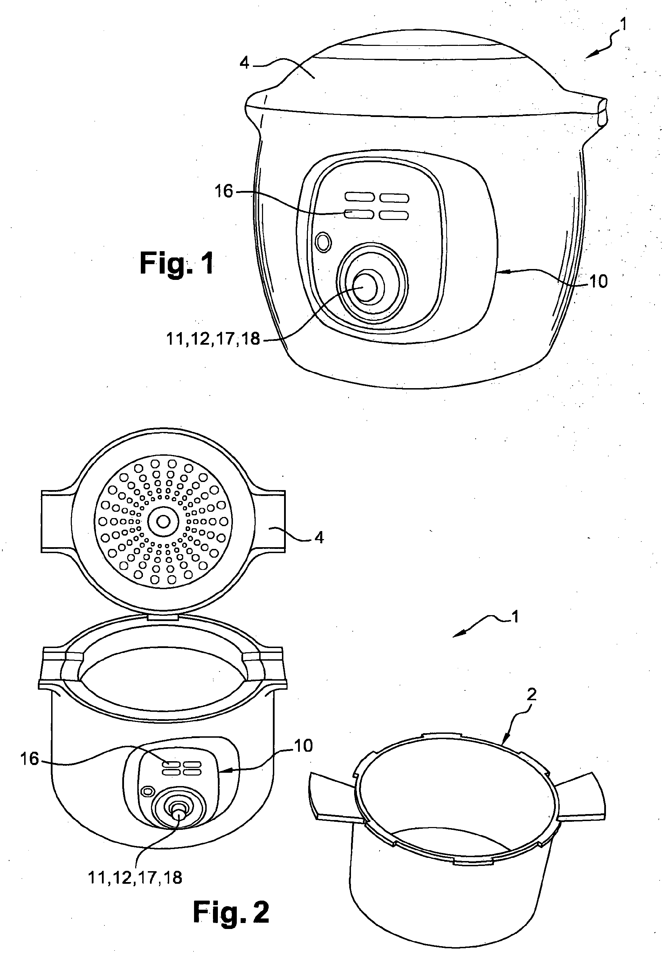

Comme illustré sur les figures 1 à 3, un appareil de cuisson 1 comprend une enceinte de cuisson 2 autrement appelée cuve 2, destinée à accueillir au moins un aliment déterminé $A_i$ ou une pluralité $\Sigma_x A_i$ d'aliments déterminés d'une recette de cuisine $R_j$.

Un aliment déterminé $A_i$ est un aliment ou un ingrédient d'une recette qui peut être cuisiné individuellement, consommé à lui seul, et qui peut être réparti par exemple selon plusieurs types de poissons ou de viandes comme le boeuf, le porc, l'agneau, ou bien de légumes comme des artichauts, des carottes, ou bien encore de riz ou de céréales comme le blé.

Une recette de cuisine $R_j$ représente quant à elle une somme $\Sigma_x A_i$ d'aliments déterminés ou ingrédients, par exemple un goulasch est préparé à partir de boeuf en cubes, d'oignons émincés, d'huile, de poivrons vert émincés, de tomates concassés et de petits pois.

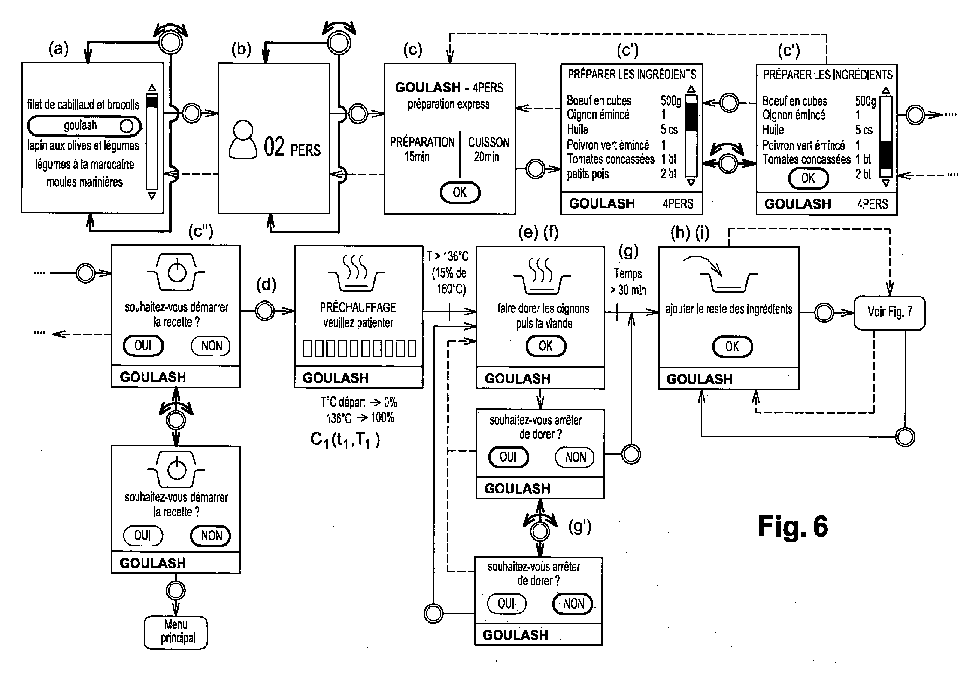

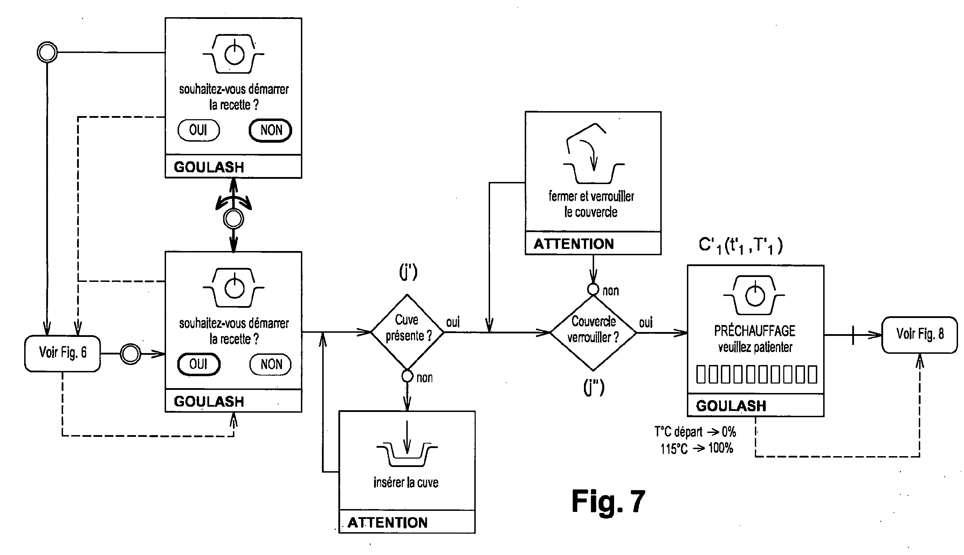

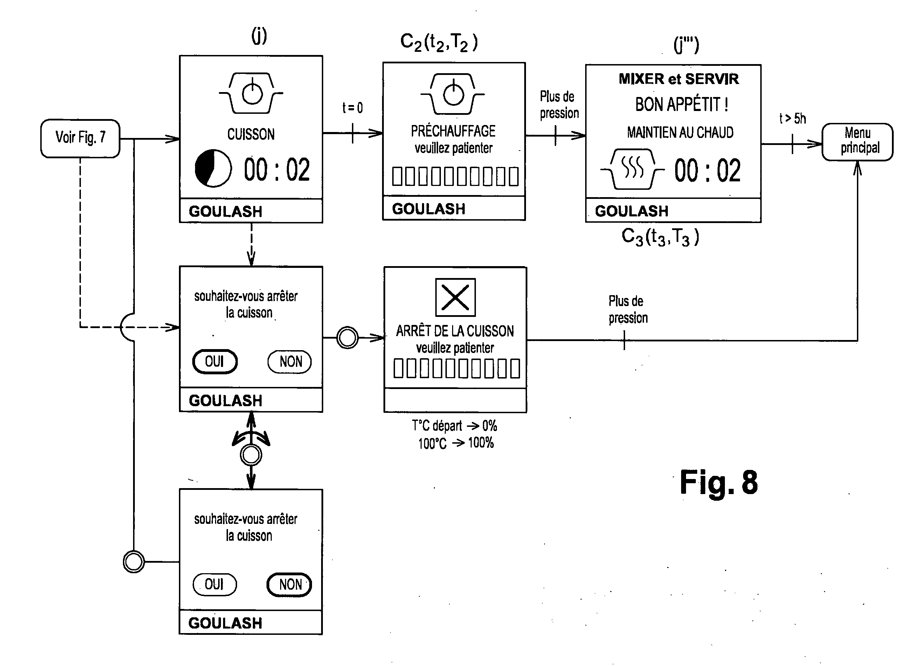

Les étapes d'un procédé de cuisson de la pluralité d'ingrédients de cette recette sont illustrées sur les figures 6 à 8.

L'appareil de cuisson 1 comprend également un composant de chauffage 3 de l'enceinte de cuisson 2.

Ce composant de chauffage 3 comprend une résistance chauffante disposée en dessous de la cuve 2 afin de chauffer celle-ci par conduction mais aussi par convection.

Dans le mode de réalisation présenté aux figures 1 à 3, l'appareil de cuisson 1 comprend un dispositif de commande 10.

Ce dispositif de commande 10 comprend une unité de commande 13 du composant de chauffage 3 agencée pour définir un cycle de cuisson $C_i$ comprenant une suite séquentielle d'au moins une combinaison déterminée $c_i$ de paramètres de cuisson déterminés $t_i$, $T_i$, tels que le temps de cuisson t et la température de cuisson T.

Un cycle de cuisson se présente donc sous la forme :

$$C_i=\{(t_1, T_1); (t_2, T_2); ...; (t_n, T_n)\}$$

où chaque binôme représente une séquence de combinaison déterminée $c_i$ de paramètres de cuisson $t_i$, $T_i$ et où n est le nombre de séquences du cycle de cuisson $C_i$.

Bien entendu, le cycle de cuisson $C_i$ peut comporter uniquement une seule séquence $c_i$ de paramètres de cuisson déterminés $t_i$, $T_i$, auquel cas l'unité de commande 13 est agencée pour déterminer directement une unique combinaison ($c_i$) de paramètres de cuisson déterminés ($t_i$, $T_i$).

De plus, les paramètres de cuisson déterminés $t_i$, $T_i$ ainsi que leur nombre sont donnés ici à titre d'exemple. Ainsi, d'autres paramètres pourraient être utilisés sans sortir du cadre de l'invention.

Le temps de cuisson t et la température de cuisson T dépendent directement de l'alimentation du composant de chauffage 3, la température T qui est impactée par la pression P dépend également de la présence du couvercle 4 de l'appareil de cuisson 1 mais aussi de l'altitude à laquelle l'appareil de cuisson 1 est utilisé.

Une différence de pression P à l'intérieur de la cuve 2 due à l'altitude entraine une modification des temps de cuisson et invalide donc les cycles de cuisson $C_i$.

Afin de conserver la validité des cycles de cuisson $C_i$, la température peut être surveillée par un dispositif de régulation en température, par exemple à l'aide d'un capteur de température T placé dans le couvercle 4, qui surveille que la cuisson se déroule à la bonne température T.

En outre, le dispositif de commande 10 comporte une base de données 15 comprenant un premier groupe G1 d'aliments déterminés $A_i$ et/ou de recettes déterminées $R_j$ comprenant une pluralité $\Sigma_x A_i$ d'ingrédients déterminés destinés à être introduits dans l'enceinte de cuisson 2 de l'appareil de cuisson 1, et un deuxième groupe G2 de paramètres descriptifs X d'au moins un élément unitaire d'un aliment déterminé $A_i$ et/ou d'au moins un ingrédient parmi la pluralité $\Sigma_x A_i$ d'ingrédients déterminés des recettes $R_j$ du premier groupe G1.

Une liste non exhaustive d'aliments déterminés $A_i$ du premier groupe G1, et une liste non exhaustive de paramètres descriptifs X du deuxième groupe G2 sont représentée à titre d'exemple dans le tableau 1 en annexe à la fin de la description.

Ce dispositif de commande 10 comprend également une interface utilisateur 14.

Cette interface utilisateur 14 comprend des moyens d'affichage 16 du type graphique avec écran matriciel afin d'améliorer l'ergonomie de l'appareil de cuisson 1.

Cet écran matriciel pourrait également être tactile.

Cette interface utilisateur 14 comprend également des premiers moyens de sélection 11 d'un aliment déterminé $A_i$ ou d'une recette déterminée $R_j$ dans le premier groupe G1 de la base de données 15, et des deuxièmes moyens de sélection 12 de paramètres descriptifs X dans le deuxième groupe G2 de la base de données 15 de l'aliment déterminé $A_i$ sélectionné ou d'au moins un ingrédient parmi la pluralité $\Sigma_x A_i$ d'ingrédients de la recette déterminée $R_j$ sélectionnée dans le premier groupe G1.

Dans l'exemple présenté, les premiers et deuxièmes moyens de sélection 11, 12 sont confondus et comprennent une molette de sélection rotative 17 permettant de déplacer un curseur ou de mettre en surbrillance un choix par la rotation de la molette et de valider ce choix en exerçant une pression selon une direction normale à un plan dans lequel s'inscrit la rotation de la molette 17.

Selon une caractéristique essentielle de l'invention, l'unité de commande 13 opère la détermination d'au moins une combinaison $c_i$ de paramètres de cuisson déterminés $t_i$, $T_i$ en fonction de la surface spécifique d'au moins un élément unitaire de l'au moins un aliment déterminé $A_i$ ou de la pluralité d'ingrédients de la recette de cuisine déterminée $R_i$ introduits dans l'enceinte de cuisson 2 de l'appareil de cuisson 1, ladite surface spécifique étant estimée à partir de paramètres descriptifs X d'au moins un élément unitaire de l'aliment déterminé $A_i$ ou d'au moins un ingrédient parmi la pluralité Ai d'ingrédients de la recette déterminée $R_i$.

Dans le mode de réalisation présenté, l'unité de commande 13 détermine un cycle de cuisson $C_i$ comprenant une suite séquentielle de combinaisons $c_i$ de paramètres de cuisson déterminés $t_i$, $T_i$.

A cet effet, l'unité de commande 13 comprend des moyens de traitement 19 échangeant des données avec la base de données 15, traitant les données échangées avec l'interface utilisateur 14, c'est-à-dire des moyens de sélection 11, 12 et des moyens d'affichage 16.

La surface spécifique désigne la surface ramenée au poids ou au volume d'un objet.

La cuisson est le résultat d'un apport d'énergie/chaleur à un aliment. La maitrise de la cuisson d'un aliment (temps de cuisson) demande donc de maitriser le transfert thermique avec cet aliment. Celui-ci peut emprunter différentes voies :

- convection,
- conduction,
- rayonnement.

Dans le cas d'un appareil de cuisson 1 selon l'invention, le transfert d'énergie est essentiellement réalisé par conduction et par convection.

Le rapport entre conduction et convection dépend directement du type de recette réalisée. Par exemple, une cuisson en immersion entraîne des phénomènes de convection entre un liquide et un solide ; une cuisson vapeur induit un transfert d'énergie dû au changement de phase en plus des phénomènes de convection et de conduction ; une cuisson par contact avec le fond de l'enceinte de cuisson 2 sans liquide entraine quant à elle principalement une cuisson par conduction.

Néanmoins, le transfert d'énergie au coeur d'un élément unitaire d'un aliment déterminé $A_i$ se fait uniquement par conduction.

Pour chacun de ces modes de cuisson, la quantité d'énergie Q transférée à l'aliment, et donc indirectement le temps nécessaire à la cuisson de cet aliment, dépend de la surface spécifique de cet aliment :

Dans le cas d'une conduction :

$$Q^{\cdot} = -K.A_{nx}\frac{dT}{dx}$$

où:

- $Q^{\cdot}$ est le flux de chaleur (se lit « Q point ») et s'exprime en watt (W);
- K est la conductibilité thermique du matériau déterminée expérimentalement (en $W.m^{-1}.K^{-1}$); cette variable dépend de l'aliment déterminé $A_i$ en présence (type de viande, type de légume,..);
- $A_{nx}$ est la surface perpendiculaire au flux de chaleur (normale à l'axe x considéré); cette variable est directement liée à la surface spécifique (plus les éléments unitaires sont petits, plus $A_{nx}$ sera important pour une même masse d'aliments)
- T est la température (en Kelvin) ;
- x est l'axe considéré.

Dans le cas d'une convection, le flux de chaleur est égal à :

$$\Phi = h \, S \, (T_S - T_\infty)$$

Où :

- $\Phi$ est le flux thermique (en W) ;
- h est le coefficient de transfert thermique (en $W.m^{-2}.K^{-1}$); avec

$$h = \frac{\Delta Q}{A.\Delta T.\Delta t}$$

où :

- $\Delta Q$ est l'énergie transférée, (en $J \Leftrightarrow W.s \Leftrightarrow kg.m^2.s^{-2}$) ;
- A est la surface d'échange, (en $m^2$) ;
- $\Delta T$ est la différence de température de part et d'autre de la surface d'échange, (en K ou °C) ;
- $\Delta t$ est l'intervalle de temps, (en s) ;
- S est la surface de l'aliment à considérer (en $m^2$) ;
- $T_S$ est la température de surface de l'aliment à la frontière des deux milieux (en K ou °C);
- $T_\infty$ est la température au coeur de l'aliment considéré (en K ou °C).

Comme dans le cas de la conduction, la surface spécifique d'un élément unitaire d'un aliment déterminé $A_i$ a une influence majeure sur la quantité d'énergie transférable à cet élément unitaire.

Une fois cette énergie transférée à la surface de l'élément unitaire, l'énergie est transférée par conduction solide/solide vers le coeur de l'élément unitaire. Ce transfert est lui très impacté par la conductibilité thermique de l'aliment considéré et donc par son type.

Les principales grandeurs physiques influençant le transfert thermique sont donc :

- la conductibilité thermique, constante pour un type d'aliment déterminé $A_i$, pouvant donc être stockés définitivement dans la base de données 15 et n'entrant pas dans les paramètres descriptifs X renseignés par l'utilisateur de l'appareil de cuisson 1,
- de la surface spécifique dépendant du type de découpe de l'aliment, faisant partie des paramètres descriptifs X renseignés par l'utilisateur de l'appareil de cuisson 1, et
- de la quantité totale d'aliment déterminé $A_i$ introduit dans l'enceinte de cuisson 2, faisant elle aussi partie des paramètres descriptifs X renseignés par l'utilisateur de l'appareil de cuisson 1.

Cette dernière grandeur peut être renseignée de diverses façons, par exemple dans le cas de la sélection d'une recette, la sélection d'un nombre de personne N pour qui la recette doit être cuisinée peut suffire à déduire la quantité totale d'un ingrédient déterminé utilisé dans la recette, la quantité d'ingrédient pour une personne étant normalisée.

Le fonctionnement de l'interface utilisateur 14 proposant de renseigner des paramètres descriptifs X du type d'aliment déterminé $A_i$ introduit dans l'enceinte de cuisson 2 puis de la forme et/ou de la taille de cet aliment déterminé $A_i$ en précisant son type de découpe est donc primordial dans l'identification du cycle de cuisson déterminé $C_i$.

Il s'est avéré expérimentalement qu'il est difficile de définir un temps de cuisson t correct pour un nombre important d'aliments ou ingrédients $A_i$ variés sans connaitre au moins ces deux paramètres descriptifs X.

Lors du choix d'une recette $R_i$, certains paramètres descriptifs X comme la forme et/ou la taille de l'aliment peuvent être présélectionnés, notamment la forme définie par le type de découpe de l'ingrédient, par exemple pour une viande, ou certains légumes comme les carottes qui peuvent être découpés en rondelles, mais aussi sa taille, petite ou grande, par exemple pour des légumes comme les petits pois ou la betterave.

Les temps de cuisson de quelques aliments ou ingrédients d'une recette en fonction de leur type de découpe et de leur quantité sont donnés à titre d'exemple dans le tableau 3 en annexe à la fin de la description.

L'unité de commande 13 du composant de chauffage 3 est également agencée pour opérer la détermination d'au moins une combinaison $c_i$ de paramètres de cuisson $t_i$, $T_i$ en fonction de la recette déterminée $R_i$ par l'utilisateur.

C'est ainsi que dans le tableau 3, le temps de cuisson $t_i$ d'une quantité déterminée d'un ingrédient déterminé selon un premier type de coupe déterminé peut être supérieur au temps de cuisson d'une même quantité de ce même ingrédient mais pour un deuxième type de coupe engendrant une surface spécifique de l'ingrédient inférieure à celle du premier type de coupe.

Dans le tableau 3, cette configuration est notamment illustrée par le boeuf en morceaux qui dans une recette particulière intégrant le boeuf comme ingrédient, nécessite un mijotage de 35 min tandis qu'une recette intégrant un rôti de boeuf ayant une surface spécifique de boeuf inférieure à une découpe en morceaux, nécessite seulement un temps de cuisson de 22 min de manière à ce que la cuisson du rôti reste saignante.

Pour réaliser une recette, l'utilisateur n'a alors besoin de renseigner que le nombre de personnes N pour qui la recette doit être cuisinée afin de pouvoir calculer la quantité totale d'ingrédient déterminé $A_i$ à introduire dans l'enceinte de cuisson 2.

L'état de l'ingrédient déterminé $A_i$, c'est-à-dire s'il est frais ou surgelé, peut également être renseigné dans les paramètres descriptifs X.

Un préchauffage ou un temps de cuisson rallongé en fonction de la masse totale de l'ingrédient déterminé $A_i$ introduit dans l'enceinte de cuisson 2 et de l'état de l'ingrédient déterminé $A_i$ peut également être envisagé.

En complément, le type de transfert thermique par immersion, par vapeur ou par contact est également important, de même que le niveau de cuisson désiré, par exemple saignant, à point, croquant, moelleux.

Ces informations constituent néanmoins des préférences Préf de l'utilisateur et ne sont donc pas des paramètres descriptifs X qui décrivent de manière intrinsèque au moins un élément unitaire d'un aliment ou d'un ingrédient déterminé $A_i$.

Ces préférences Préf sont rassemblées dans un troisième groupe G3 de la base de données 15 et sélectionnées par l'utilisateur à l'aide d'un troisième moyens de sélection 18 qui dans le mode de réalisation présenté, est confondu avec les deux autres moyens de sélection 11, 12.

Une liste non exhaustive de préférences du troisième groupe G3 est représentée à titre d'exemple dans le tableau 1 en annexe à la fin de la description.

L'unité de commande 13 prend alors en compte ces préférences Préf lors de la mise en oeuvre du cycle de cuisson t, T par exemple en appliquant une même séquence du cycle de cuisson plusieurs fois.

Les cycles de cuisson $C_i$ sont déterminés à partir de résultats d'essais extrapolés pour couvrir l'ensemble des combinaisons des paramètres descriptifs X décrits ainsi qu'éventuellement des préférences de l'utilisateur. Ils sont définis et enregistrés de manière définitive dans la base de données 15 et ne sont pas modifiables à la fabrication de l'appareil de cuisson 1.

Ces cycles de cuisson $C_i$ comprenant une suite séquentielle d'au moins une combinaison déterminée $c_i$ de paramètres de cuisson déterminés $t_i$, $T_i$ forment un quatrième groupe G4 dans la base de données 15.

Ce quatrième groupe G4 apparait à titre indicatif dans le tableau 1 en annexe à la fin de la description.

Ainsi, chaque combinaison déterminée $c_i$ de la suite de paramètres de cuisson déterminés $t_i$, $T_i$ est associée à des combinaisons possibles entre :

- les aliments déterminés $A_i$ ou les recettes déterminées $R_i$ du premier groupe G1, avec
- les paramètres descriptifs X d'au moins un élément unitaire des aliments déterminés $A_i$ ou d'au moins un ingrédient $A_i$ parmi la pluralité d'ingrédients des recettes déterminées $R_i$ du deuxième groupe G2.

La détermination du cycle de cuisson $C_i$ par les moyens de traitement 19 de l'unité de commande 13 consiste alors à sélectionner un cycle de cuisson déterminé $C_i$ du quatrième groupe G4 en fonction de la sélection par l'utilisateur :

- d'un aliment déterminé $A_i$ ou d'une recette déterminée $R_i$ dans le premier groupe G1,
- de paramètres descriptifs X dans le deuxième groupe G2 de la base de données 15 de l'au moins un ingrédient parmi la pluralité d'ingrédients de la recette déterminée $R_i$ sélectionnée dans le premier groupe G1.

L'enchainement de certaines séquences de combinaisons déterminées $c_i$ du cycle de cuisson $C_i$ peut quant à lui dépendre des préférences Préf de l'utilisateur sélectionnées dans le troisième groupe G3.

Cet enchainement est représenté par les flèches disposées entre chacun des éléments du tableau 1 représenté en annexe à la fin de la description.

Ce quatrième groupe G4 ainsi que les autres trois listes G1, G2, G3 peut être mis à jour à partir d'un serveur distant sur lequel se connecte le dispositif grâce à des moyens de connexion (non illustrés), par exemple des moyens de connexion à un serveur distant via le réseau Internet.

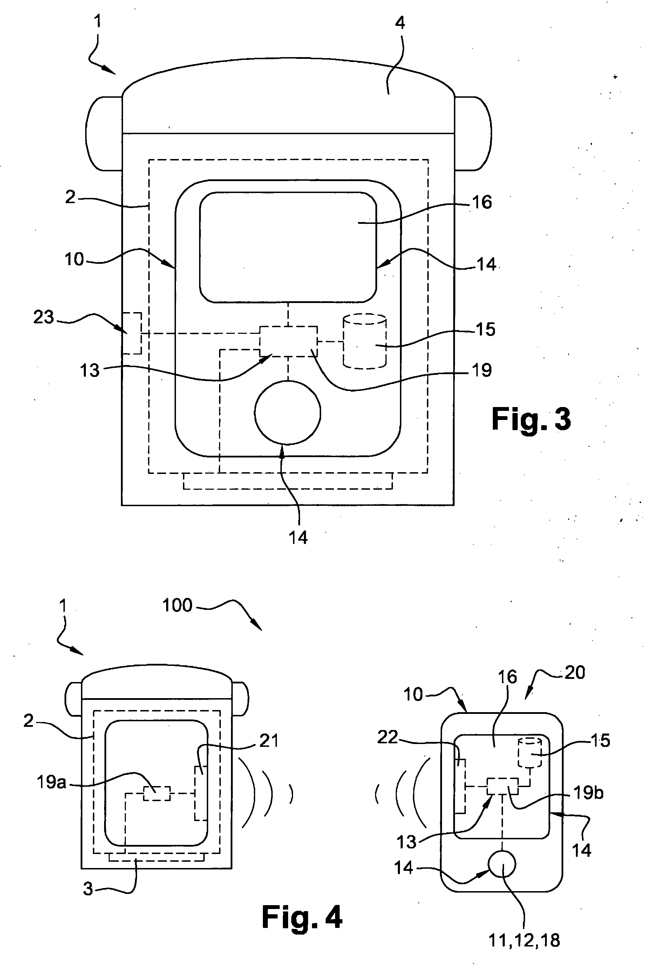

Dans un deuxième mode de réalisation illustré à la figure 4, le dispositif de commande 10 n'est pas intégré à l'appareil de cuisson 1.

Le dispositif de commande 10 communique néanmoins avec l'appareil de cuisson 1 via respectivement des premiers moyens de communication 21 et des deuxièmes moyens de communication 22, de préférence sans fils.

Dans ce mode de réalisation, le dispositif de commande 10 et l'appareil de cuisson 1 forment un ensemble de cuisson 100.

Dans ce mode de réalisation, le dispositif de commande 10 peut par exemple être un ordiphone 20.

Les moyens de traitement 19 se décomposent alors en un premier moyen de traitement de données 19a disposé dans l'appareil de cuisson 1 afin de traiter les données transitant par les premiers moyens de communication 21 et commander l'alimentation du composant de chauffage 3, et en un deuxième moyen de traitement de données 19b pouvant être confondu avec un moyen de traitement de données de l'ordiphone et traitant les données transitant par les deuxièmes moyens de communication 22, la base de données 15, et l'interface utilisateur, c'est à dire les moyens de sélection 11, 12, 13 et les moyens d'affichage 16.

La présente invention concerne également un procédé de cuisson d'un aliment $A_i$ déterminé ou d'une pluralité d'ingrédients d'une recette déterminée $R_i$ dans un appareil de cuisson 1 tel que décrit précédemment dans l'un ou l'autre des deux modes de réalisation.

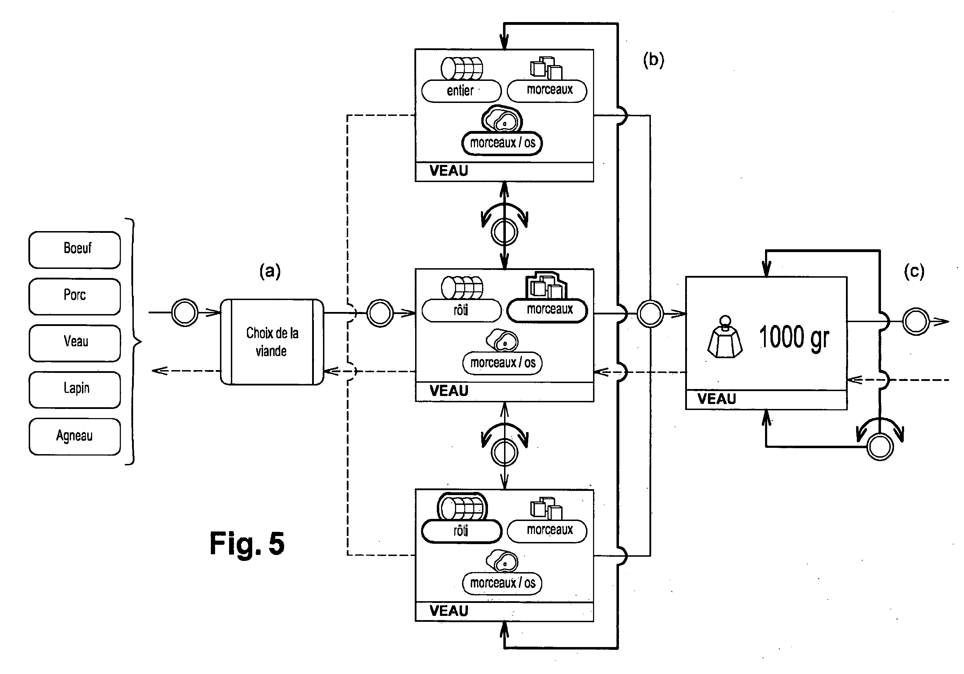

La figure 5 illustre le procédé de cuisson d'un rôti de veau selon une mise en oeuvre préférée de l'invention.

Dans une première étape (a), l'utilisateur commence par sélectionner la viande de veau dans le premier groupe G1 de la base de données 15 à l'aide des premiers moyens de sélection 11.

Dans une seconde étape (b), l'utilisateur sélectionne dans le deuxième groupe G2 des paramètres descriptifs X d'au moins un élément unitaire de la viande de veau sélectionnée dans le premier groupe G1 à l'aide des deuxièmes moyens de sélection 12.

Dans l'exemple présenté, ces paramètres concernent le type de découpe de la viande, en l'occurrence un rôti ainsi que sa quantité, ici 1000 grammes.

Dans une troisième étape (c), l'unité de commande 13 détermine des paramètres de cuisson $t_i$, $T_i$ en fonction de la surface spécifique du rôti de veau, ladite surface spécifique étant estimée à partir de la masse du rôti de veau.

Les figures 6 à 8 illustrent quant à elles les étapes de préparation d'une recette de goulasch $R_{goulasch}$ selon une mise en oeuvre du procédé de cuisson d'une pluralité d'ingrédients d'une recette, à partir d'un appareil de cuisson 1 selon l'invention.

Les ingrédients nécessaires à la préparation d'une telle recette $R_{goulasch}$, les paramètres descriptifs X à prendre en compte pour sa préparation ainsi que les préférences d'un utilisateur sont réunis dans un deuxième tableau en annexe à la fin de la description.

Ce procédé comprend une première étape (a) consistant à sélectionner une recette déterminée $R_i$ dans le premier groupe G1 de la base de données à l'aide des premiers moyens de sélection 11.

A ce titre, les moyens d'affichage 16 présentent à l'utilisateur une liste de recettes sur laquelle l'utilisateur peut naviguer afin de sélectionner la recette qu'il désire cuisiner.

La navigation sur la liste de recettes s'effectue en entrainant en rotation la molette de sélection rotative 17, tandis que la validation d'un choix s'effectue en exerçant une pression selon une direction normale à un plan dans lequel s'inscrit la rotation de la molette 17.

Dans l'exemple présenté, l'utilisateur choisit de cuisiner une recette de goulasch $R_{goulasch}$.

Un deuxième écran s'affiche alors sur les moyens d'affichage 16 demandant à l'utilisateur de sélectionner le nombre de personnes N pour lequel il veut cuisiner la recette $R_{goulasch}$.

Cette sélection constitue une deuxième étape (b) dans laquelle l'utilisateur sélectionne dans le deuxième groupe G2 des paramètres descriptifs X d'au moins un ingrédient parmi la pluralité d'ingrédients de la recette déterminée $R_{goulasch}$ sélectionnée dans le premier groupe G1 à l'aide des deuxièmes moyens de sélection 12.

Ici, les deuxièmes moyens de sélection 12 sont confondus avec les premiers moyens de sélection 11, et formés par la molette de sélection rotative 17.

Le paramètre descriptif X sur la pluralité d'ingrédients de la recette déterminée $R_{goulasch}$ sélectionnée concerne le nombre de personne N pour lequel la recette déterminée $R_{goulasch}$ est réalisée.

Ce nombre de personne N est utilisé pour déterminer la quantité totale d'ingrédients déterminés à introduire dans l'enceinte de cuisson 2.

Dans une troisième étape (c), l'unité de commande 13 détermine alors un cycle de cuisson $C_{goulasch}$ comprenant une suite séquentielle de combinaison déterminée $c_i$ des paramètres de cuisson $t_i$, $T_i$ en fonction de la surface spécifique des ingrédients déterminés $A_i$ introduits dans l'enceinte de cuisson 2 de l'appareil de cuisson 1, ladite surface spécifique étant estimée à partir de la sélection de la recette déterminée $R_{goulasch}$ dans le premier groupe G1 de la base de données 15, et de la sélection dans le deuxième groupe G2 des paramètres descriptifs X d'au moins un ingrédient parmi la pluralité d'ingrédients de la recette déterminée $R_{goulasch}$ sélectionnée.

A titre indicatif, l'unité de commande 13 indique sur les moyens d'affichage 16, un temps de préparation estimé ainsi que le temps de cuisson déterminé correspondant à la somme des temps de toutes les séquences des combinaisons déterminées $c_i$ du cycle de cuisson $C_{goulasch}$.

Une première sous étape (c') affiche sur les moyens d'affichage 16 les ingrédients $A_i$ nécessaires à la recette $R_{goulasch}$ ainsi que leur quantité pour le nombre de personnes N sélectionné et le type de découpe présélectionné, par exemple boeuf en cubes.

L'utilisateur peut faire défiler la liste des ingrédients à l'aide de la molette de sélection rotative 17.

Une deuxième sous étape (c") demande la confirmation à l'utilisateur qu'il veut bien réaliser cette recette $R_{goulasch}$ après qu'il ait pris connaissance des ingrédients $A_i$ à utiliser.

Une réponse négative renvoie l'utilisateur vers un menu principal pouvant le ramener à la sélection d'une nouvelle recette $R_i$.

Une réponse affirmative conduit à une quatrième étape (d) du procédé de cuisson consistant à démarrer le cycle de cuisson $C_{goulasch}$, en particulier à démarrer la première séquence de combinaison déterminée $c_1$ de ce cycle $C_{goulasch}$.

La première séquence de combinaison déterminée $c_1$ de ce cycle $C_{goulasch}$ correspond au préchauffage de l'enceinte de cuisson 2 selon des paramètres de cuisson $t_1$, $T_1$ avec $t_1$ égal à 30 min, $T_1$ égal à 136°C correspondant à une température permettant de faire dorer des premiers ingrédients de la recette $R_{goulasch}$, à la pression atmosphérique $P_1$ étant donné que l'appareil de cuisson 1, à ce stade de la recette $R_{goulasch}$, ne dispose pas de couvercle 4 sur l'enceinte de cuisson 2.

Dans une cinquième étape (e), les moyens d'affichage 16 indiquent les premiers ingrédients de la recette de goulasch $R_{goulasch}$ à introduire dans l'enceinte de cuisson 2, en l'occurrence un oignon émincé puis de la viande en cubes, dont les quantités totales sont déterminées en fonction des paramètres descriptifs X sélectionnés, en l'occurrence pour quatre personnes.

L'utilisateur réalise ensuite dans une sixième étape (f), l'introduction de ces premiers ingrédients de la recette de goulasch $R_{goulasch}$.

La septième étape (g) consiste quant à elle à appliquer la première séquence de combinaison déterminée $c_1$, c'est-à-dire à attendre la fin du temps déterminé dans la combinaison déterminée $c_1$ formant cette première séquence afin de réaliser une précuisson ou dorage de ces premiers ingrédients.

Parallèlement à cette septième étape (g), au cours du dorage de la viande et des oignons, l'unité de commande 13 réalise une sous étape (g') en affichant une requête sur les moyens d'affichage 16 à l'encontre de l'utilisateur afin de lui faire part d'une préférence Préf concernant le dorage de ces premiers ingrédients.

Afin d'orienter les préférences de l'utilisateur, cette préférence Préf de cuisson est présélectionnée pour cette recette $R_{goulasch}$ dans le troisième groupe G3 de la base de données 15.

La requête consiste à savoir si l'utilisateur désire continuer ou non à faire dorer la viande et les oignons.

Si l'utilisateur répond oui, alors l'unité de commande 13 réitérera la première séquence de combinaison déterminée $c_1$ du cycle de cuisson $C_{goulasch}$.

Le nombre de réitération est cependant défini de manière à ne pas dépasser un temps maximum de 30 minutes.

Si l'utilisateur répond non, alors le procédé de cuisson attendra la fin du temps indiqué dans la première séquence de combinaison déterminée $c_1$ avant de basculer vers une huitième étape (h).

La huitième étape (h) consiste à indiquer séquentiellement un ou d'autres ingrédients de la recette $R_{goulasch}$ sélectionnée à introduire dans l'enceinte de cuisson en fonction des paramètres descriptifs sélectionnés, en l'occurrence en fonction du nombre de personnes N.

Dans la recette de goulasch $R_{goulasch}$ présentée, les autres ingrédients sont consitués par le reste des ingrédients.

Dans d'autres recettes, cette étape peut consister à n'indiquer qu'un seul ingrédient.

Cette huitième étape (h) conduit naturellement à une neuvième étape (i) consistant à introduire le reste des ingrédients dans l'enceinte de cuisson 2.

Dans une dixième étape (j), l'unité de commande 13 applique une autre séquence de combinaison déterminée $c_2$ du cycle de cuisson $C_{goulasch}$ dont les paramètres de cuisson déterminés $t_2$, $T_2$ permettent de réaliser la cuisson des ingrédients se trouvant déjà dans l'enceinte de cuisson 2 et du reste des ingrédients rajoutés ultérieurement.

Cependant, à ce stade du procédé, le couvercle 4 de l'appareil de cuisson 1 n'est toujours pas refermé, ce qui a permis l'introduction du reste des aliments dans l'enceinte de cuisson 2.

L'unité de commande 13 envoie alors au préalable une série de requêtes à destination de l'utilisateur, destinés à préparer l'enceinte de cuisson 2 aux paramètres de cuisson de la nouvelle séquence de combinaison déterminée $c_2$ du cycle de cuisson $C_{goulasch}$.

La première de ces requêtes, constituant une sous étape (j'), consiste à vérifier la présence de la cuve 2.

Si la cuve 2 est absente, l'unité de commande 13 envoie une alerte à l'utilisateur via les moyens d'affichage 16 afin de lui indiquer qu'il doit insérer la cuve 2.

Si la cuve 2 est présente, l'unité de commande 13 vérifie ensuite la fermeture et le verrouillage du couvercle 4, ce qui conduit à une deuxième requête, constituant une deuxième sous étape (j").

Si le couvercle n'est pas fermé et verrouillé, l'unité de commande 13 envoie une alerte à l'utilisateur via les moyens d'affichage 16 afin de lui indiquer qu'il doit fermer et verrouiller le couvercle 4.

Si le couvercle est fermé et verrouiller, l'unité de commande 13 démarre une nouvelle combinaison déterminée

$c_{1'}$ du cycle de cuisson $C_{goulasch}$ correspondant à un autre préchauffage selon des paramètres de cuisson $t_{1'}$, $T_{1'}$ avec $T_{1'}$ égal à 115°C.

A la fin du préchauffage, l'unité de commande 13 applique la nouvelle combinaison déterminée $c_2$ du cycle de cuisson $C_{goulasch}$.

A la fin du temps de cuisson indiqué dans la séquence de combinaison déterminée $c_2$ du cycle de cuisson $C_{goulasch}$, une sous étape (j''') consistant à maintenir au chaud le contenu de l'enceinte de cuisson 2 peut éventuellement être réalisée en démarrant une nouvelle combinaison déterminée $c_3$ du cycle de cuisson $C_{goulasch}$.

Le procédé de cuisson comporte également le cas échéant, une onzième étape consistant à recommencer le procédé à partir de la huitième étape (h) jusqu'à avoir introduit la totalité des aliments de la recette de cuisine et avoir terminé la dernière séquence du cycle de cuisson $C_i$ déterminé.

Dans le cas de la recette $R_{goulasch}$ cette étape n'est pas appliquée car la recette $R_{goulasch}$ ne comporte que deux phases d'introduction et donc d'indication d'ingrédients à introduire dans l'enceinte de cuisson 2.

Enfin, le procédé de cuisson peut comprendre des étapes supplémentaires consistant à demander à l'utilisateur si il désire poursuivre l'élaboration de la recette.

Ces demandes peuvent survenir par exemple à la fin de chaque séquence de combinaison déterminée $c_i$ du cycle de cuisson $C_i$

Le dispositif comprend également des moyens d'interruption permettant à l'utilisateur de pouvoir interrompre l'élaboration de sa recette à tout moment.

La sollicitation de l'utilisateur peut être déclenchée par des moyens d'alerte 23 commandée par l'unité de commande 13, par exemple des bips d'intervention dans le cas du premier mode de réalisation présenté aux figures 1 à 3, ou bien des moyens vibrants ou de sonnerie existants dans le cas du deuxième mode de réalisation présenté à la figure 4.

Il apparaît bien entendu que les différents modes de réalisations détaillés ci-dessus ne constituent que des exemples de mises en oeuvre de l'invention telle que définie par les revendications ci-jointes. Des variantes de ces différents modes de réalisations peuvent être envisagées et les différents modes de réalisations décrits peuvent être combinés de façon aisée par l'homme du métier.

**Annexes**

## Tableau 1 :

| G1 | |
|---|---|
| Type d'aliment ou recette | Aliment ou ingrédient |
| viande | bœuf |
| | porc |
| | volaille |
| poisson | poisson |
| légume | carotte |
| | courgette |

| G2 | | | |
|---|---|---|---|
| Type de découpe ou conditionnement | Etat de l'aliment | Quantité | |
| | | nombre de personnes (N) 1<N<6 | poids (P) |
| morceaux | Frais | N ? | P ? |
| rôti | Surgelé | | |
| morceaux avec os | | | |
| filet | | | |
| darnes | | | |
| rondelle | | | |
| entier | | | |
| moitié | | | |
| en cubes | | | |
| émincés | | | |
| concassées | | | |
| sans objet | | | |

| G3 | |
|---|---|
| Préférences | |
| Mode de cuisson | Niveau de cuisson |
| vapeur | saignant |
| immersion | à point |
| fond de cuve | dorage |

| G4 |
|---|
| cycles de cuisson Ci |
| ti, Ti, |

## Tableau 2 :

| G1 | | G2 | | | | G3 | |
|---|---|---|---|---|---|---|---|
| Type d'aliment ou recette | Aliment ou ingrédient | Type de découpe ou conditionn ement | Etat de l'aliment | Quantité | | Préférences | |
| | | | | nombre de personnes (N) | poids | Mode de cuisson | Niveau de cuisson |
| goulasch | boeuf | en cubes | Frais | 4 personnes | 500g | fond de cuve | dorage |
| | oignon | émincés | Frais | | 1 | | |
| | huile | sans objet | Frais | | 5 cuillères | | |
| | poivron vert | émincés | Frais | | 1 | | |
| | tomate | concassée s | Frais | | 1 boite | | |
| | petits pois | sans objet | Frais | | 2 boites | | |

**Tableau 3 :**

| Aliment | Type de découpe | Quantité (en g) | Temps de cuisson (en min) | Aliment | Type de découpe | Quantité (en g) | Temps de cuisson (en min) |
|---|---|---|---|---|---|---|---|
| boeuf | Morceaux | 400 | 35 | volaille | entière | 1000 | 20 |
| | | 500 | 35 | | | 1200 | 21 |
| | | 600 | 35 | | | 1300 | 23 |
| | | 700 | 35 | | | 1400 | 24 |
| | | 800 | 35 | | | 1500 | 25 |
| | | 900 | 35 | poisson | Filets | 400 | 3 |
| | | 1000 | 35 | | | 500 | 3 |
| | Rôti | 400 | 17 | | | 600 | 3 |
| | | 500 | 17 | | | 700 | 3 |
| | | 600 | 19 | | | 800 | 3 |
| | | 700 | 19 | | | 900 | 3 |
| | | 800 | 21 | | | 1000 | 3 |
| | | 900 | 21 | | Darnes | 400 | 6 |
| | | 1000 | 22 | | | 500 | 6 |
| | Morceaux avec os | 400 | 30 | | | 600 | 7 |
| | | 500 | 32 | | | 700 | 7 |
| | | 600 | 34 | | | 800 | 7 |
| | | 700 | 37 | | | 900 | 9 |
| | | 800 | 40 | | | 1000 | 9 |
| | | 900 | 42 | carotte | rondelles | 362 | 7 |
| | | 1000 | 45 | | | 503 | 7 |
| porc | Morceaux | 400 | 10 | | | 988 | 7 |
| | | 500 | 12 | | Entière | 3 (266g) | 15 |
| | | 600 | 13 | | | 6 (437g) | 15 |
| | | 700 | 14 | | | 9(528g) | 15 |
| | | 800 | 15 | courgette | entière | 2 (440g) | 7 |
| | | 900 | 16 | | | 4 (766g) | 7 |
| | | 1000 | 17 | | | 6 (1020g) | 7 |
| | Morceaux avec os | 400 | 10 | | morceaux | 318 | 7 |
| | | 500 | 11 | | | 524 | 7 |
| | | 600 | 12 | | | 1106 | 7 |
| | | 700 | 13 | pomme de terre | Morceaux | 208 | 14 |
| | | 800 | 14 | | | 482 | 14 |
| | | 900 | 15 | | | 671 | 14 |
| | | 1000 | 16 | | Entière | 2 (234g) | 28 |
| | Rôti | 400 | 28 | | | 5(482g) | 28 |
| | | 500 | 32 | | | 8 (608g) | 28 |
| | | 600 | 35 | . | . | . | . |
| | | 700 | 38 | . | . | . | . |
| | | 800 | 38 | . | . | . | . |
| | | 900 | 40 | | | | |
| | | 1000 | 40 | | | | |
| . | . | . | . | | | | |

(suite)

| Aliment | Type de découpe | Quantité (en g) | Temps de cuisson (en min) | | Aliment | Type de découpe | Quantité (en g) | Temps de cuisson (en min) |
|---|---|---|---|---|---|---|---|---|
| . | . | . | . | | | | | |
| . | . | . | . | | | | | |

**Revendications**

**1.** Appareil de cuisson (1) avec un dispositif de commande (10) comprenant une unité de commande (13) agencée pour opérer la détermination d'au moins une combinaison ($c_i$) de paramètres de cuisson déterminés ($t_i$, $T_i$) en fonction d'au moins la surface spécifique d'au moins un ingrédient d'une pluralité d'ingrédients d'une recette de cuisine déterminée ($R_i$) introduits dans une enceinte de cuisson (2) de l'appareil de cuisson (1), ladite surface spécifique étant estimée à partir de paramètres descriptifs (X) de l'au moins un ingrédient parmi la pluralité d'ingrédients de la recette déterminée ($R_i$).

**2.** Appareil (1) selon la revendication 1, dans lequel l'unité de commande est agencée pour définir un cycle de cuisson ($C_i$) comprenant une suite séquentielle de combinaisons ($c_i$) de paramètres de cuisson déterminés ($t_i$, $T_i$).

**3.** Appareil (1) selon l'une des revendications précédentes, dans lequel l'unité de commande (13) est agencée pour déterminer l'au moins une combinaison de paramètres de cuisson en prenant en compte le type d'aliment déterminé ou le type de l'au moins un ingrédient parmi la pluralité d'ingrédients de la recette déterminée.

**4.** Appareil (1) selon l'une des revendications précédentes, dans lequel le dispositif de commande (10) comprend :

- une base de données (15) comprenant :
- un premier groupe (G1) comprenant des aliments déterminés ($A_i$) et/ou des recettes déterminées ($R_i$) comprenant une pluralité d'ingrédients déterminés ($A_i$) destinés à être introduits dans l'enceinte de cuisson (2) de l'appareil de cuisson (1), et
- un deuxième groupe (G2) comprenant des paramètres descriptifs (X) d'au moins un ingrédient parmi la pluralité d'ingrédients des recettes déterminées ($R_i$) du premier groupe (G1),
- une interface utilisateur (14) comprenant :

- des premiers moyens de sélection (11) d'un aliment déterminé ($A_i$) ou d'une recette déterminée ($R_i$) dans le premier groupe (G1) de la base de données (15), et
- des deuxièmes moyens de sélection (12) de paramètres descriptifs (X) dans le deuxième groupe (G2) de la base de données (15) de l'au moins un ingrédient parmi la pluralité d'ingrédients de la recette déterminée ($R_i$) sélectionnée dans le premier groupe (G1).

**5.** Appareil (1) selon la revendication 4, dans lequel l'interface utilisateur (14) comprend des moyens d'affichage (16) du type graphique avec écran matriciel, et les premiers (11) et/ou deuxièmes moyens de sélection (12) comprennent une molette de sélection rotative (17).

**6.** Appareil (1) selon l'une des revendications précédentes, dans lequel les paramètres descriptifs (X) de l'au moins un ingrédient parmi la pluralité d'ingrédients de la recette déterminée ($R_i$) comprennent la forme de l'ingrédient et/ou sa taille.

**7.** Appareil (1) selon l'une des revendications précédentes, dans lequel les paramètres descriptifs (X) de l'au moins un ingrédient parmi l'a pluralité d'ingrédients de la recette déterminée ($R_i$) comprennent la quantité d'ingrédient, notamment leur poids total.

**8.** Appareil (1) selon l'une des revendications précédentes, dans lequel les paramètres descriptifs (X) de l'au moins un ingrédient parmi la pluralité d'ingrédients de la recette déterminée ($R_i$) comprennent l'état de l'au moins un ingrédient, notamment surgelé ou frais.

**9.** Appareil (1) selon l'une des revendications 4 à 8, pourvu qu'elle dépende de la revendication 4, dans lequel l'interface utilisateur (14) comprend des troisièmes moyens de sélection (18) de préférences (Préf) de l'utilisateur dans un troisième groupe (G3) de la base de données (15), notamment le mode de cuisson, par exemple vapeur, par immersion, dorage, et le niveau de cuisson, par exemple saignant, à point, croquant, moelleux, l'unité de commande (13) étant agencée pour opérer la détermination d'une combinaison $(c_i)$ de paramètres de cuisson déterminés $(t_i, T_i)$ en fonction également des préférences (Préf) sélectionnées par l'utilisateur.

**10.** Appareil (1) selon l'une des revendications 4 à 9, pourvu qu'elle dépende de la revendication 4, dans lequel la base de données (15) comprend un quatrième groupe (G4) de cycles de cuisson $(C_i)$ comprenant une suite séquentielle de combinaisons déterminées $(c_i)$ de paramètres de cuisson déterminés $(t_i; T_i)$, chaque combinaison déterminée $(c_i)$ de la suite de paramètres de cuisson étant associé à des combinaisons possibles entre :

- les aliments déterminés $(A_i)$ ou les recettes déterminées $(R_i)$ du premier groupe (G1), avec
- les paramètres descriptifs (X) d'au moins un ingrédient parmi la pluralité d'ingrédients des recettes déterminées $(R_i)$ du deuxième groupe (G2), et avec
- le cas échéant les préférences (Préf) du troisième groupe (G3),

la détermination du cycle de cuisson $(C_i)$ par l'unité de commande (13) consistant à sélectionner un cycle de cuisson $(C_i)$ du quatrième groupe (G4) en fonction de la sélection par l'utilisateur :

- d'un aliment déterminé $(A_i)$ ou d'une recette déterminée $(R_i)$ dans le premier groupe (G1),
- de paramètres descriptifs (X) dans le deuxième groupe (G2) de la base de données (15) d'au moins un ingrédient parmi la pluralité d'ingrédients de la recette déterminée $(R_i)$ sélectionnée dans le premier groupe (G1), et le cas échéant
- des préférences (Préf) sélectionnées dans le troisième groupe (G3).

**11.** Appareil de cuisson (1) selon la revendication 1, comprenant une enceinte de cuisson (2) destinée à accueillir au moins un aliment déterminé $(A_i)$ ou une pluralité d'ingrédients d'une recette de cuisine déterminée $(R_i)$, un composant de chauffage (3) de l'enceinte de cuisson (2).

**12.** Ensemble (100) comprenant d'une part un appareil de cuisson (1) comportant une enceinte de cuisson (2) destinée à accueillir au moins un aliment déterminé $(A_i)$ ou une pluralité d'ingrédients d'une recette de cuisine déterminée $(R_i)$, un composant de chauffage (3) de l'enceinte de cuisson (2) et des premiers moyens de communication (21), et d'autre part un dispositif de commande (10) selon l'une des revendications 1 à 11, ledit dispositif (10) comprenant en outre des deuxièmes moyens de communication (22) agencés pour communiquer avec les premiers moyens de communications (21) de l'appareil de cuisson (1).

**13.** Procédé de cuisson d'un aliment déterminé $(A_i)$ ou d'au moins un ingrédient parmi une pluralité d'ingrédients $(A_i)$ d'une recette déterminée $(R_i)$ dans un appareil de cuisson (1) selon l'une des revendications 11, comprenant une étape consistant à déterminer au moins une combinaison $(c_i)$ de paramètres de cuisson déterminés $(t_i, T_i)$ en fonction de la surface spécifique de l'au moins un ingrédient parmi la pluralité d'ingrédients de la recette de cuisine déterminée $(R_i)$ introduits dans l'enceinte de cuisson (2) de l'appareil de cuisson (1), ladite surface spécifique étant estimée à partir de paramètres descriptifs (X) de l'au moins un ingrédient parmi la pluralité d'ingrédients de la recette déterminée $(R_i)$.

**14.** Procédé de cuisson comprenant des étapes consistant à :

(a) : sélectionner un aliment (Ai) déterminé ou une recette déterminée (Ri) dans un premier groupe (G1) de la base de données (15) à l'aide de premiers moyens de sélection (11),
(b) : sélectionner dans un deuxième groupe (G2) de la base de données (15) des paramètres descriptifs (X) de l'au moins un ingrédient parmi la pluralité d'ingrédients de la recette déterminée (Ri) sélectionnée dans le premier groupe (G1) à l'aide de deuxièmes moyens de sélection (12),
(c) : réaliser l'étape du procédé de cuisson selon la revendication 13.

**15.** Procédé de cuisson d'une pluralité d'ingrédients $(A_i)$ d'une recette selon la revendication 14, comprenant en outre des étapes consistant à:

(d) : démarrer un cycle de cuisson $(C_i)$ déterminé comprenant une suite séquentielle de combinaisons $(c_i)$ de

paramètres de cuisson déterminés ($t_i$, $T_i$),

(e) : indiquer un ou des premiers ingrédients ($A_i$) de la recette ($R_i$) sélectionnée à introduire dans l'enceinte de cuisson (2) en fonction des paramètres descriptifs (X) sélectionnés,

(f) : introduire un ou des premiers ingrédients ($A_i$) de la recette ($R_i$) sélectionnée dans l'enceinte de cuisson (2) selon les paramètres descriptifs (X) sélectionnés,

(g) : appliquer une première séquence de la suite séquentielle de combinaison déterminée ($c_i$) des paramètres de cuisson ($t_i$, $T_i$) comprise dans le cycle de cuisson ($C_i$) déterminé afin de réaliser une précuisson de ce ou de ces premiers ingrédients ($A_i$).

**16.** Procéder de cuisson selon la revendication 15 comprenant en outre des étapes consistant à :

(h) : indiquer séquentiellement un ou d'autres ingrédients ($A_i$) de la recette ($R_i$) sélectionnée à introduire dans l'enceinte de cuisson (2) en fonction des paramètres descriptifs (X) sélectionnés, et

(i) : introduire le ou les autres ingrédients ($A_i$) indiqués de la recette ($R_i$) sélectionnée dans l'enceinte de cuisson (2) en fonction des paramètres descriptifs (X) sélectionnés,

(j) : appliquer une autre séquence de la suite séquentielle de combinaison déterminée ($c_i$) des paramètres de cuisson ($t_i$, $T_i$) comprise dans le cycle de cuisson ($C_i$) afin de réaliser la cuisson du ou des ingrédients ($A_i$) se trouvant déjà dans l'enceinte de cuisson 2 et de ce ou de ces autres ingrédients ($A_i$),

(k) : le cas échéant, recommencer à l'étape (h) consistant à indiquer séquentiellement un ou d'autres ingrédients ($A_i$) de la recette ($R_i$) sélectionnée à introduire dans l'enceinte de cuisson (2) en fonction des paramètres descriptifs (X) sélectionnés jusqu'à avoir introduit la totalité des aliments ($A_i$) de la recette ($R_i$) de cuisine et avoir terminé la dernière séquence de la suite séquentielle de combinaison déterminée ($c_i$) des paramètres de cuisson ($t_i$, $T_i$) du cycle de cuisson ($C_i$) déterminé.

## Patentansprüche

**1.** Kochgerät (1) mit einem Steuergerät (10), eine Steuereinheit (13) umfassend, die angeordnet ist, um die Bestimmung zumindest einer Kombination ($c_i$) von bestimmten Kochparametern ($t_i$, $T_i$) in Abhängigkeit von zumindest der spezifischen Oberfläche zumindest einer Zutat aus einer Vielzahl von Zutaten eines bestimmten Kochrezepts ($R_i$) vorzunehmen, die in ein Kochgefäß (2) des Kochgerätes (1) eingebracht werden, wobei die besagte spezifische Oberfläche ausgehend von den beschreibenden Parametern (X) der zumindest einen Zutat aus der Vielzahl von Zutaten des bestimmten Rezepts ($R_i$) geschätzt wird.

**2.** Gerät (1) nach Anspruch 1, wobei die Steuereinheit angeordnet ist, um einen Kochzyklus ($C_i$) zu definieren, der eine sequentielle Folge an Kombinationen ($c_i$) von bestimmten Kochparametern ($t_i$, $T_i$) umfasst.

**3.** Gerät (1) nach einem der vorherigen Ansprüche, wobei die Steuereinheit (13) angeordnet ist, um die zumindest eine Kombination von Kochparametern zu bestimmen, indem man den bestimmten Nahrungsmitteltyp oder den Typ der zumindest einen Zutat aus der Vielzahl von Zutaten des bestimmten Rezepts berücksichtigt.

**4.** Gerät (1) nach einem der vorherigen Ansprüche, wobei das Steuergerät (10) folgendes umfasst:

- eine Datenbank (15) folgendes umfassend:
- eine erste Gruppe (G1), die bestimmte Nahrungsmittel ($A_i$) und/ oder bestimmte Rezepte ($R_i$) umfasst, die eine Vielzahl von bestimmten Zutaten ($A_i$) umfassen, die dazu bestimmt sind, in das Kochgefäß (2) des Kochgerätes (1) eingebracht zu werden, und
- eine zweite Gruppe (G2), die beschreibende Parameter (X) von zumindest einer Zutat aus der Vielzahl von Zutaten der bestimmten Rezepte ($R_i$) der ersten Gruppe (G1) umfasst,
- eine Benutzeroberfläche (14), folgendes umfassend:

- erste Mittel zur Auswahl (11) eines bestimmten Nahrungsmittels ($A_i$) oder eines bestimmten Rezepts ($R_i$) aus der ersten Gruppe (G1) der Datenbank (15), und
- zweite Mittel zur Auswahl (12) von beschreibenden Parametern (X) aus der zweiten Gruppe (G2) der Datenbank (15) der zumindest einen Zutat aus der Vielzahl von Zutaten des bestimmten Rezepts ($R_i$), das aus der ersten Gruppe (G1) ausgewählt wird.

**5.** Gerät (1) nach Anspruch 4, wobei die Benutzeroberfläche (14) Anzeigemittel (16) in der Art einer grafischen Anzeige mit Matrixschirm umfasst, und die ersten (11) und/ oder zweiten Auswahlmittel (12) einen Auswahl-Drehknopf (17) umfassen.

6. Gerät (1) nach einem der vorherigen Ansprüche, wobei die beschreibenden Parameter (X) der zumindest einen Zutat aus der Vielzahl von Zutaten des bestimmten Rezepts ($R_i$) die Form der Zutat und/ oder seine Größe umfassen.

7. Gerät (1) nach einem der vorherigen Ansprüche, wobei die beschreibenden Parameter (X) der zumindest einen Zutat aus der Vielzahl von Zutaten des bestimmten Rezepts ($R_i$) die Zutatenmenge, und vor allem ihr Gesamtgewicht umfassen.

8. Gerät (1) nach einem der vorherigen Ansprüche, wobei die beschreibenden Parameter (X) der zumindest einen Zutat aus der Vielzahl von Zutaten des bestimmten Rezepts ($R_i$) den Zustand der zumindest einen Zutat umfasst, vor allem, ob sie gefroren oder frisch ist.

9. Gerät (1) nach einem der Ansprüche 4 bis 8, vorausgesetzt, dass er von Anspruch 4 abhängt, wobei die Benutzeroberfläche (14) dritte Mittel zur Auswahl (18) von Vorlieben (Préf) des Benutzers aus einer dritten Gruppe (G3) der Datenbank (15) umfasst, und vor allem den Garmodus, wie zum Beispiel dampfgegart, im Wasser gekocht, gebräunt, und das Garniveau, wie beispielsweise blutig, medium, knusprig, flaumig, wobei die Steuereinheit (13) angeordnet ist, um die Bestimmung einer Kombination ($c_i$) von bestimmten Kochparametern ($t_i$, $T_i$) ebenfalls in Abhängigkeit von den vom Benutzer ausgewählten Vorlieben (Préf) vorzunehmen.

10. Gerät (1) nach einem der Ansprüche 4 bis 9, vorausgesetzt, dass er von Anspruch 4 abhängt, wobei die Datenbank (15) eine vierte Gruppe (G4) an Kochzyklen ($C_i$) umfasst, die eine sequentielle Folge an bestimmten Kombinationen ($c_i$) von bestimmten Kochparametern ($t_i$, $T_i$) umfasst, wobei jede bestimmte Kombination ($c_i$) der Folge von Kochparametern folgenden möglichen Kombinationen zwischen folgenden Parametern zugeordnet wird:

   - den bestimmten Nahrungsmitteln ($A_i$) oder den bestimmten Rezepten ($R_i$) aus der ersten Gruppe (G1), mit
   - den beschreibenden Parametern (X) zumindest einer Zutat aus der Vielzahl von Zutaten der bestimmten Rezepte ($R_i$) aus der zweiten Gruppe (G2), und mit
   - gegebenenfalls den Vorlieben (Préf) aus der dritten Gruppe (G3),

   wobei die Bestimmung des Kochzyklus ($C_i$) durch die Steuereinheit (13) darin besteht, einen Kochzyklus ($C_i$) aus der vierten Gruppe (G4) auszuwählen, in Abhängigkeit von der Auswahl durch den Benutzer:

   - eines bestimmten Nahrungsmittels ($A_i$) oder eines bestimmten Rezepts ($R_i$) aus der ersten Gruppe (G1),
   - von beschreibenden Parametern (X) aus der zweiten Gruppe (G2) der Datenbank (15) von zumindest einer Zutat aus der Vielzahl von Zutaten des bestimmten Rezepts ($R_i$), die aus der ersten Gruppe (G1) ausgewählt wird, und gegebenenfalls
   - der Vorlieben (Préf), die aus der dritten Gruppe (G3) ausgewählt werden.

11. Kochgerät (1) nach Anspruch 1, ein Kochgefäß (2), das dazu bestimmt ist, zumindest ein bestimmtes Nahrungsmittel ($A_i$) oder eine Vielzahl von Zutaten eines bestimmten Kochrezepts ($R_i$) aufzunehmen, und eine Heizkomponente (3) des Kochgefäßes (2) umfassend.

12. Einheit (100), die einerseits ein Kochgerät (1) umfasst, das ein Kochgefäß (2) umfasst, das dazu bestimmt ist, zumindest ein bestimmtes Nahrungsmittel ($A_i$) oder eine Vielzahl von Zutaten eines bestimmten Kochrezepts ($R_i$) aufzunehmen, eine Heizkomponente (3) des Kochgefäßes (2) und erste Kommunikationsmittel (21), und andererseits ein Steuergerät (10) nach einem der Ansprüche 1 bis 11, wobei das besagte Gerät (10) darüber hinaus zweite Kommunikationsmittel (22) umfasst, die angeordnet sind, um mit den ersten Kommunikationsmitteln (21) des Kochgerätes (1) zu kommunizieren.

13. Verfahren zum Kochen eines bestimmten Nahrungsmittels ($A_i$) oder zumindest einer Zutat aus einer Vielzahl von Zutaten ($A_i$) eines bestimmten Rezepts ($R_i$) in einem Kochgerät (1) nach Anspruch 11, einen Schritt umfassend, der darin besteht, zumindest eine Kombination ($c_i$) von bestimmten Kochparametern ($t_i$, $T_i$) in Abhängigkeit von der spezifischen Oberfläche der zumindest einen Zutat aus der Vielzahl von Zutaten des bestimmten Kochrezepts ($R_i$) zu bestimmen, die in das Kochgefäß (2) des Kochgeräts (1) eingebracht werden, wobei die besagte spezifische Oberfläche ausgehend von beschreibenden Parametern (X) der zumindest einen Zutat aus der Vielzahl von Zutaten des bestimmten Rezepts ($R_i$) geschätzt wird.

**14.** Verfahren zum Kochen, die folgenden Schritte umfassend:

(a): die Auswahl eines bestimmten Nahrungsmittels ($A_i$) oder eines bestimmten Rezepts ($R_i$) aus einer ersten Gruppe (G1) der Datenbank (15) mithilfe erster Auswahlmittel (11),

(b): die Auswahl aus einer zweiten Gruppe (G2) der Datenbank (15) der beschreibenden Parameter (X) der zumindest einen Zutat aus der Vielzahl von Zutaten des bestimmten Rezepts ($R_i$), die mithilfe der zweiten Auswahlmittel (12) aus der ersten Gruppe (G1) ausgewählt werden,

(c): die Ausführung des Schritts des Kochverfahrens nach Anspruch 13.

**15.** Verfahren zum Kochen einer Vielzahl von Zutaten ($A_i$) eines Rezepts nach Anspruch 14, darüber hinaus die folgenden Schritte umfassend:

(d): Starten eines bestimmten Kochzyklus (Ci), eine sequentielle Folge an Kombinationen ($c_i$) von bestimmten Kochparametern ($t_i$, $T_i$) umfassend,

(e): die Angabe von einem oder mehreren Zutaten ($A_i$) des ausgewählten Rezepts ($R_i$), die in Abhängigkeit von den ausgewählten beschreibenden Parametern (X) in das Kochgefäß (2) einzubringen sind,

(f): das Einbringen einer oder erster Zutaten ($A_i$) des ausgewählten Rezepts ($R_i$) in das Kochgefäß (2) in Abhängigkeit von den ausgewählten beschreibenden Parametern (X),

(g): das Anwenden einer ersten Sequenz der sequentiellen Folge der bestimmten Kombination ($c_i$) der Kochparameter ($t_i$, $T_i$), die im Kochzyklus ($C_i$) enthalten sind, der bestimmt wird, um ein Vorgaren dieses oder dieser ersten Zutaten ($A_i$) vorzunehmen.

**16.** Verfahren zum Kochen nach Anspruch 15, darüber hinaus die folgenden Schritte umfassend:

(h): die sequentielle Angabe eines oder anderer Zutaten ($A_i$) des ausgewählten Rezepts ($R_i$), die in Abhängigkeit von den ausgewählten beschreibenden Parametern (X) in das Kochgefäß (2) einzubringen sind, und

(i): das Beigeben der anderen angegebenen Zutat(en) ($A_i$) des ausgewählten Rezepts ($R_i$) in das Kochgefäß (2) in Abhängigkeit von den ausgewählten beschreibenden Parametern (X),

(j): das Anwenden einer anderen Sequenz der sequentiellen Folge der bestimmten Kombination ($c_i$) der Kochparameter ($t_i$, $T_i$), die im Kochzyklus ($C_i$) enthalten ist, um das Garen der Zutat(en) ($A_i$) vorzunehmen, die sich bereits im Kochgefäß (2) befinden, sowie von dieser oder diesen anderen Zutat(en) ($A_i$),

(k): gegebenenfalls die Wiederholung des Schrittes (h), der darin besteht, sequentiell eine Zutat oder andere Zutaten ($A_i$) des ausgewählten Rezepts ($R_i$) anzugeben, die in Abhängigkeit von den ausgewählten beschreibenden Parametern (X) in das Kochgefäß (2) einzubringen sind, bis alle Nahrungsmittel ($A_i$) des Kochrezepts ($R_i$) eingebracht worden sind, und die letzte Sequenz der sequentiellen Folge der bestimmten Kombination ($c_i$) der Kochparameter ($t_i$, $T_i$) des bestimmten Kochzyklus ($C_i$) abgeschlossen ist.

**Claims**

**1.** Cooking appliance (1) with a control device (10) comprising a control unit (13) arranged to determine at least one combination ($c_i$) of determined cooking parameters ($t_i$, $T_i$) as a function at least of the specific surface area of at least one ingredient of a plurality of ingredients of a determined recipe ($R_i$) inserted into the cooking chamber (2) of the cooking appliance (1), said specific surface area being estimated from descriptive parameters (X) of the at least one ingredient from among the plurality of ingredients of the determined recipe ($R_i$).

**2.** Cooking appliance (1) according to claim 1, wherein the control unit is arranged to define a cooking cycle ($C_i$) comprising a sequential series of combinations ($c_i$) of determined cooking parameters ($t_i$, $T_i$).

**3.** Cooking appliance (1) according to one of the preceding claims, wherein the control unit (13) is arranged to determine the at least one combination of cooking parameters taking into account the type of determined food or the type of the at least one ingredient from among the plurality of ingredients of the determined recipe.

**4.** Cooking appliance (1) according to one of the preceding claims, wherein the control device (10) comprises:

- a database (15) comprising:

  - a first group (G1) of determined foods ($A_i$) and/or determined recipes ($R_i$) comprising a plurality of deter-

mined ingredients ($A_i$) designed to be inserted into the cooking chamber (2) of the cooking appliance (1), and
- a second group (G2) of descriptive parameters (X) for at least one determined foods ($A_i$) and/or the plurality of determined ingredients of the recipes ($R_i$) of the first group (G1),

- a user interface (14) comprising:

- first means (11) for selecting a determined food ($A_i$) or a determined recipe ($R_i$) from the first group (G1) of the database (15), and
- second means (12) for selecting descriptive parameters (X) from the second group (G2) of the database (15) of the at least one unitary element of the selected determined food ($A_i$) or the at least one ingredient from among the plurality of ingredients of the selected determined recipe ($R_i$) from the first group (G1).

5. Cooking appliance (1) according to claim 4, wherein the user interface (14) comprises display means (16) of the graphic type with a liquid-crystal screen, and the first (11) and/or second (12) selection means comprise a rotary selection knob (17).

6. Cooking appliance (1) according to one of the preceding claims, wherein the descriptive parameters (X) of the at least one unitary element of the determined food ($A_i$) or of the at least one ingredient from among the plurality of ingredients of the determined recipe ($R_i$) comprise the shape and/or size of the unitary element.

7. Cooking appliance (1) according to one of the preceding claims, wherein the descriptive parameters (X) of the at least one unitary element of the determined food ($A_i$) or of the at least one ingredient from among the plurality of ingredients of the determined recipe ($R_i$) comprise the quantity of unitary elements, in particular their total weight.

8. Cooking appliance (1) according to one of the preceding claims, wherein the descriptive parameters (X) of the at least one unitary element of the determined food ($A_i$) or of the at least one ingredient from among the plurality of ingredients of the determined recipe ($R_i$) comprise the state of the at least one unitary element, in particular frozen or fresh.

9. Cooking appliance (1) according to one of claims 4 to 8, provided that it depends on claim 4, wherein the user interface (14) comprises third means (18) for selecting the user's preferences (Pref) from a third group (G3) of the database (15), in particular the cooking method, for example steam, immersion, browning, and the level of cooking, for example rare, medium, crisp, soft, the control unit (13) being arranged to make the determination of a combination ($c_i$) of determined cooking parameters ($t_i$, $T_i$) also as a function of the preferences (Pref) selected by the user.

10. Cooking appliance (1) according to one of claims 4 to 9, provided that it depends on claim 4, wherein the database (15) comprises a fourth group (G4) of cooking cycles ($C_i$) comprising a sequential series of determined combinations ($c_i$) of determined cooking parameters ($t_i$, $T_i$), each determined combination of the series of cooking parameters being associated with possible combinations between:

- the determined foods ($A_i$) or the determined recipes ($R_i$) of the first group (G1), with
- the descriptive parameters (X) of the at least one unitary element of the determined foods ($A_i$) or of the at least one ingredient from among the plurality of ingredients of the determined recipes ($R_i$) of the second group (G2), and with
- if applicable, the preferences (Pref) from the third group (G3),

the determination of the cooking cycle ($C_i$) by the control unit (13) consisting of selecting a cooking cycle ($C_i$) from the fourth group (G4) as a function of the selection by the user of:

- a determined food ($A_i$) or a determined recipe ($R_i$) from the first group (G1),
- descriptive parameters (X) from the second group (G2) of the database (15) of the at least one unitary element of the selected determined food ($A_i$) or of the at least one ingredient from among the plurality of ingredients of the selected determined recipe ($R_i$) from the first group (G1), and, if applicable,
- preferences (Pref) selected from the third group (G3).

11. A cooking appliance (1) according to claim 1 and comprising a cooking chamber (2) designed to receive at least one determined food ($A_i$) or a plurality of ingredients of a determined recipe ($R_i$), a heating component (3) for heating the cooking chamber (2.

**12.** A cooking assembly (100) comprising a cooking appliance (1) having a cooking chamber (2) designed to receive at least one determined food ($A_i$) or a plurality of ingredients of a determined recipe ($R_i$), a heating component (3) for heating the cooking chamber (2), and first communication means (21) on the one hand, and a control device (10) according to one of claims 1 to 11 on the other hand, said device (10) also comprising second communication means (22) arranged to communicate with the first wireless communication means (21) of the cooking appliance (1).

**13.** A method for cooking a determined food ($A_i$) or at least one ingredient from among a plurality of ingredients ($A_i$) of a determined recipe ($R_i$) in a cooking appliance (1) according to claim 11, comprising a step consisting of determining at least one combination ($c_i$) of determined cooking parameters ($t_i$, $T_i$) as a function of the specific surface area of the at least one unitary element of the at least one determined food ($A_i$) or of the at least one ingredient from among the plurality of ingredients of the determined recipe ($R_i$) inserted into the cooking chamber (2) of the cooking appliance (1), said specific surface area being estimated from descriptive parameters (X) of the at least one unitary element of the determined food ($A_i$) or of the at least one ingredient from among the plurality of ingredients of the determined recipe ($R_i$).

**14.** A cooking method comprising the following steps:

(a): selecting a determined food (Ai) or a determined recipe (Ri) from the first group (G1) of the database (15) using first selection means (11),
(b): selecting, from a second group (G2) of the database (15), descriptive parameters (X) of the at least one unitary element of the determined food (Ai) or the at least one ingredient from among the plurality of ingredients of the determined recipe (Ri) selected from the first group (G1) using second selection means (12),
(c): carrying out the step of the method according to claim 13.

**15.** The method for cooking a plurality of ingredients ($A_i$) of a recipe according to claim 14, also comprising the following steps:

(d): starting a determined cooking cycle ($C_i$) comprising a sequential series of combinations ($c_i$) of determined cooking parameters ($t_i$, $T_i$),
(e): indicating one or more first ingredients ($A_i$) of the selected recipe ($R_i$) to be inserted into the cooking chamber (2) as a function of the selected descriptive parameters (X),
(f): inserting one or more first ingredients ($A_i$) of the selected recipe ($R_i$) into the cooking chamber (2) according to the selected descriptive parameters (X),
(g): applying a first sequence of the sequential series of the determined combination ($c_i$) of the cooking parameters ($t_i$, $T_i$) comprised in the determined cooking cycle ($C_i$) so as to precook said first ingredient(s) ($A_i$).

**16.** The cooking method according to claim 15, also comprising the following steps:

(h): sequentially indicating one or other ingredient(s) ($A_i$) of the selected recipe ($R_i$) to be inserted into the cooking chamber (2) as a function of the selected descriptive parameters (X), and
(i): inserting the other ingredient(s) ($A_i$) indicated in the selected recipe ($R_i$) into the cooking chamber (2) as a function of the selected descriptive parameters (X),
(j): applying another sequence of the sequential series of the determined combination ($c_i$) of cooking parameters ($t_i$, $T_i$) comprised in the cooking cycle ($C_i$) so as to cook the ingredient(s) ($A_i$) already located in the cooking chamber (2) and said other ingredient(s) ($A_i$),
(k): if applicable, restarting at step (h) consisting of sequentially indicating one or other ingredient(s) ($A_i$) of the selected recipe ($R_i$) to be inserted into the cooking chamber (2) as a function of the selected descriptive parameters (X) until all of the foods ($A_i$) in the recipe ($R_i$) have been inserted and the last sequence of the sequential series of the determined combination ($c_i$) of cooking parameters ($t_i$, $T_i$) of the determined cooking cycle ($C_i$) has been completed.

**Fig. 1**

**Fig. 2**

**Fig. 3**

**Fig. 4**

**Fig. 5**

Boeuf

Porc

Veau

Lapin

Agneau

(a)

Choix de la viande

(b)

entier | morceaux

morceaux / os

**VEAU**

rôti | morceaux

morceaux / os

**VEAU**

rôti | morceaux

morceaux / os

**VEAU**

(c)

1000 gr

**VEAU**

EP 2 594 169 B1

**Fig. 6**

souhaitez-vous démarrer
la recette ?

OUI     NON

**GOULASH**

fermer et verrouiller
le couvercle

**ATTENTION**

$C'_1(t'_1, T'_1)$

souhaitez-vous démarrer
la recette ?

OUI     NON

**GOULASH**

(j')

Cuve
présente ?

oui

non

Couvercle
verrouiller ?

oui

non

PRÉCHAUFFAGE
veuillez patienter

**GOULASH**

T°C départ → 0%
115°C → 100%

Voir Fig. 6

insérer la cuve

**ATTENTION**

(j")

Voir Fig. 8

Voir Fig. 8

**Fig. 7**

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5893051 A